# EUROPEAN PATENT SPECIFICATION

(11) **EP 2 423 080 B1**
(45) Date of publication and mention of the grant of the patent: **09.04.2014**
(21) Application number: 11178953.3
(22) Date of filing: 26.08.2011
(51) Int. Cl.: B62D 25/16

(54) **Wheel arch structure and assembly method of the same**
Radbogenstruktur und Aufbauverfahren dafür
Structure de passage de roue et procédé d'assemblage correspondant

(30) Priority: 27.08.2010 JP 2010190462
(43) Date of publication of application: 29.02.2012
(73) Proprietor: Honda Motor Co., Ltd., Tokyo 107-8556 (JP)
(72) Inventor: Sera, Takashi, Saitama, 351-0193 (JP); Sakai, Hiroyuki, Saitama, 351-0193 (JP)
(74) Representative: Herzog, Markus

(56) References cited:
- EP-A2- 1 721 811
- US-A- 3 584 898
- US-A- 4 062 580

## Description

The present invention relates to a wheel arch structure according to the preamble of claim 1. A wheel arch structure of the generic kind is known from EP 1 721 811 A2.

As described in Japanese Patent No. 4234113, a structure has been conventionally employed in which a plurality of clip holes for connecting a wheel arch protector (wheel arch molding) is formed along the edge of the wheel arch formed in an arc shape from a metallic outer panel to a resin bumper and a plurality of clips protruding from the vehicle inner side surface of the wheel arch protector is pressed into the clip holes to fix the wheel arch protector to the wheel arch.

In the structure described in Japanese Patent No.423411, however, since the wheel arch protector is connected to two members of the outer panel and the bumper, if the wheel arch protector is connected to the outer panel and the bumper by using the outer panel as a reference, the clip holes provided on the bumper may be displaced from the clips of the wheel arch protector when the assembly accuracy of the outer panel and the bumper is varied. Therefore, assembling the bumper and the wheel arch protector is sometimes difficult and troublesome.

Furthermore, since the bumper is commonly formed of a resin member and the lower end of the bumper is usually a free end, the bumper may sometimes be deformed to be away from the wheel arch protector when the clip of the wheel arch protector is pressed into the clip hole of the bumper. Thus, sometimes it has been difficult to connect the wheel arch protector well.

The present invention has been made in view of the above problems, and an object thereof is to provide a wheel arch structure by which a wheel arch protector can be accurately and readily connected to a wheel arch formed in an arc shape from the outer panel to the bumper and to provide an assembly method of the same.

### SUMMARY OF THE INVENTION

A first aspect of the present invention provides a wheel arch structure according to claim 1 which is made by connecting a wheel arch protector to a wheel arch formed in an arch shape from an outer panel to a bumper, the wheel arch protector including: a protector body which is formed in an arc shape; a plurality of clips which protrudes from a vehicle inner side surface of the protector body; and an engaging claw which is provided at a lower end of the protector body on the bumper side; wherein the outer panel includes a plurality of clip holes, each of which is connected to a part of the plurality of clips; and the bumper includes a plurality of clip holes, each of which is connected to the other part of the plurality of clips and an engaging portion which is provided at a lower end of the bumper and with which the engaging claw is engaged.

In the aforementioned wheel arch structure, it is preferable that the engaging claw is tiltably engaged with the engaging portion in a state where the clips are not connected to the clip holes.

In the aforementioned wheel arch structure, the engaging claw protrudes from an upper surface of an extending portion extending toward a vehicle inner side from the lower end portion of the protector body, the engaging portion includes a through hole formed at a flange portion extending toward the vehicle inner side from a lower end portion of the bumper, and a tapered portion is formed on a vehicle outer side surface of the engaging claw and a protruding portion is formed on the vehicle inner side surface of the engaging claw.

In the aforementioned wheel arch structure, it is preferable that the length of the clip holes provided at the bumper in a circumferential direction of the wheel arch is longer than that of the clip holes provided at the outer panel.

In the aforementioned wheel arch structure, it is preferable that the clips which correspond to the clip holes provided at the bumper is more rigid than the clips which correspond to the clip holes provided at the outer panel

A second aspect of the present invention provides a method according to claim 5 for assembling the aforementioned wheel arch structure, the method including steps of a first step of restraining the lower end of the wheel arch protector on the bumper side by engaging the engaging claw with the engaging portion, a second step of connecting one of the clips to one of the clip holes which is positioned in substantially center among the plurality of clip holes provided to the outer panel, the one of the clips corresponding to the one of the clip holes, and a third step of connecting the clips to the remaining clip holes in order from the one of the clip holes positioned in substantially center toward the clip holes on both sides of the one of the clip holes.

In the aforementioned method, it is preferable that in the first step the engaging claw is engaged with the engaging portion with the wheel arch protector being inclined with respect to the vehicle body, and in the second step, the wheel arch protector is moved toward the vehicle body with the engaging claw being a pivot point of the movement of the wheel arch protector in order to connect the one of the clips to the one of the clip holes positioned at substantially center among the plurality of the clip holes.

### BRIEF DESCRIPPTION OF THE DRAWINGS

Fig. 1 is a perspective view showing a left rear part of a vehicle including a wheel arch structure according to an embodiment of the present invention.
Fig. 2A is a side view showing a part around a wheel arch of an outer panel.
Fig. 2B is a cross sectional view along the line I-I shown in Fig. 2A.
Fig. 3A is a side view showing a part around the wheel arch of a rear bumper.
Fig. 3B is a cross sectional view along the line II - II shown in Fig. 3A.
Fig. 4 is a perspective view showing a lower end part of the rear bumper seen downwardly from the vehicle inner side.
Fig. 5A is a perspective view showing a wheel arch protector seen from the vehicle inner side.
Fig. 5B is an enlarged view of the part A shown in Fig. 5A.
Fig. 6A is a cross sectional view along the line III-III shown in Fig. 5A.
Fig. 6B is a cross sectional view along the line IV-IV shown in Fig. 5A.
Fig. 7A is a cross sectional view along the line V - V in Fig. 5B showing the state where the wheel arch protector is inclined.
Fig. 7B is a cross sectional view along the line V - V in Fig. 5B showing the state where the wheel arch protector is fixed to the outer panel.
Fig. 8 is a perspective view showing the wheel arch structure seen rearward from the front side of the vehicle.
Fig. 9A is a cross sectional view along the line VI-VI in Fig. 8 showing the state that the rear bumper is deformed.
Fig. 9B is a cross sectional view along the line VI-VI in Fig. 8 showing the state that bumper clips are connected to the clip holes of the rear bumper.

### DETAILED DESCRIPTION OF THE PREFERRED EMBODIMENT

Next, an embodiment of the present invention is described in detail with reference to the accompanying drawings. The directions described in the embodiment correspond to the front-rear, left-right and up-down directions of the vehicle.

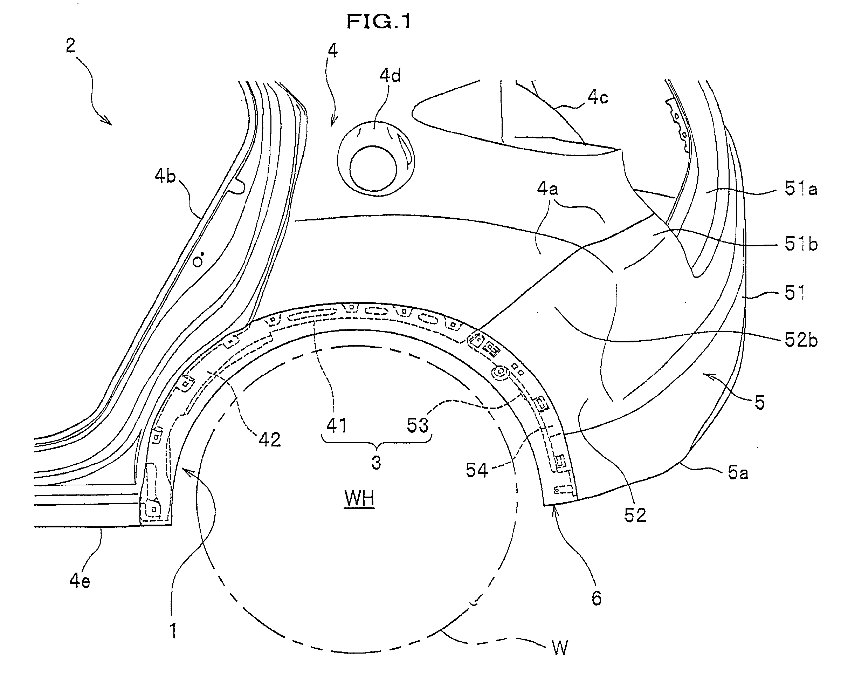

Fig. 1 is a perspective view showing a left rear part of the vehicle which is provided with a wheel arch structure according to the embodiment of the present invention.

As shown in Fig. 1, a wheel arch structure 1 according to the embodiment is a structure of a wheel arch 3 which is a semi-circular cut-out of the vehicle body formed along a wheel house Wh that stores a tire W of the vehicle 2. The wheel arch structure 1 includes an outer panel 4 which constitutes a side surface of a vehicle body, a rear bumper 5 which constitutes a rear end portion from the side surface of the vehicle body and a wheel arch protector 6 which is assembled to a wheel arch 3 formed from the outer panel 4 to the rear bumper 5.

The vehicle 2 includes on the right rear side of the vehicle body a wheel arch structure 1 having the same structure as that on the left rear side, however, only the left rear side wheel arch structure 1 is explained in this description, and an explanation of the wheel arch structure 1 on the right rear side is omitted.

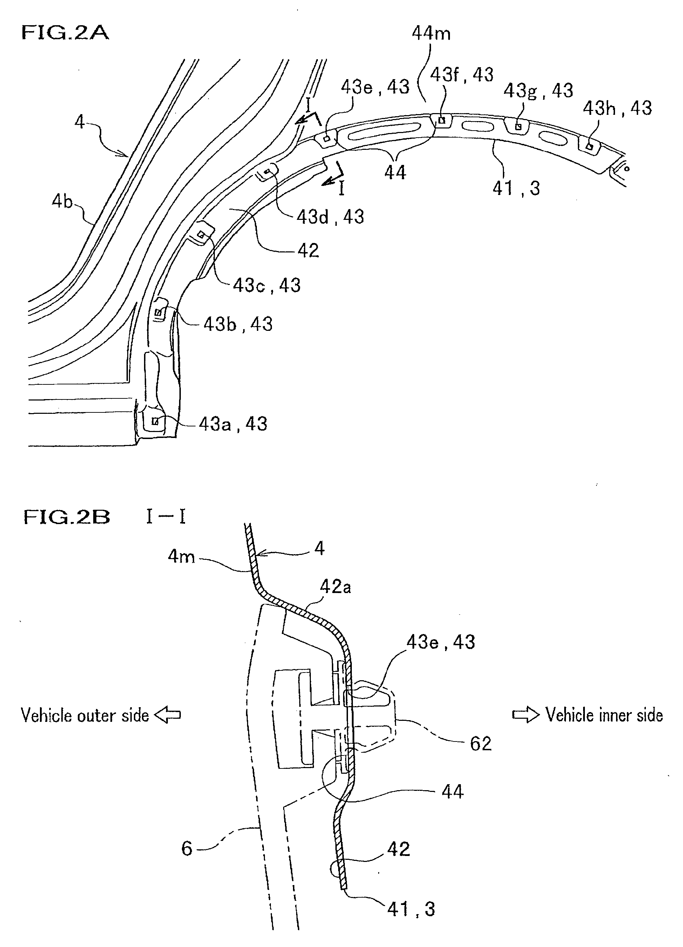

Fig. 2A is a side view showing a part around the wheel arch of the outer panel. Fig. 2B is a cross sectional view along the line I-I in Fig. 2A.

As shown in Figs. 1, 2A and 2B, the outer panel 4 is a steel plate member which constitutes an outer surface (the left side surface in the embodiment) of the vehicle body. The outer panel 4 is pressed into a predetermined shape by, for example, a press forming, and is welded and fixed to a vehicle body frame together with an inner panel (not shown). A rear bumper 5, which is described later, is fixed to a rear end portion 4a of the outer panel 4. By cutting the outer panel 4 in a semi-circular shape, a panel side wheel arch 41 is formed in a part of a lower end portion 4e of the outer panel 4 close to the rear end portion 4a.

The outer panel 4 also includes a side door opening part 4b, a back door opening part 4c, and a filler neck opening 4d.

As shown in Figs. 2A and 2B, a plurality of clip holes 43, 43 for fixing the clips 62 of the wheel arch protector 6, which is described later, are formed at the edge 42 of the panel side wheel arch 41. In this embodiment, eight clip holes 43a, 43b, 43c, 43d, 43e, 43f, 43g, 43h are formed from the front side in order in the circumferential direction of the panel side wheel arch 41 with a space formed between each of the eight clip holes 43a, 43b, 43c, 43d, 43e, 43f, 43g, and 43h. Each clip hole 43 is formed to be in a substantially square shape.

As shown in Fig. 2B, an edge 42 of the panel side wheel arch 41 is recessed in the vehicle inner side more than a decorative surface 4m of the outer panel 4. Formed between the decorative surface 4m and the edge 42 is a step portion 42a. Further, a peripheral portion 44 of each clip hole 43 is recessed in a vehicle inner direction more than the surface of the edge 42.

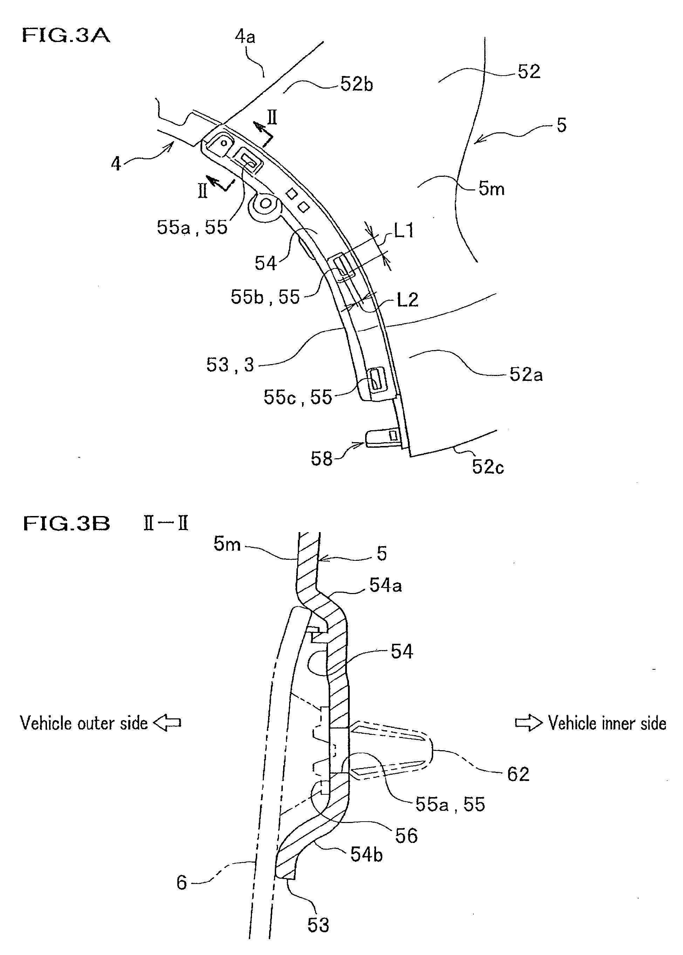

Fig. 3A is a side view showing a part around the wheel arch of the rear bumper. Fig. 3B is a cross sectional view along the line II - II .

As shown in Figs. 1, 3A and 3B, the rear bumper 5 is a member for alleviating an impact or a vibration generated at the time of rear end collision. The rear bumper 5 includes a main body 51 extending in the left-right direction at the rear end part of the vehicle body and a pair of side bodies 52, 52 (only the left side body 52 is shown) which extend frontward from the left and right ends of the main body 51. The main body 51 is provided with a back door recessed portion 51a at the upper end central portion thereof. By cutting the side body 52 in a circular shape, a bumper side wheel arch 53 is provided at the front end portion 52a of the side body 52.

The left and right ends of the upper end portion 51b of the main body 51 and left and right upper end portions 52b of the side body 52 is fixed at the rear end portion 4a of the outer panel 4.

As shown in Figs. 3A and 3B, a plurality of clip holes 55, 55... for fixing clips 62 of the wheel arch protector 6 (described later) are formed on the edge of the bumper side wheel arch 53. In the embodiment, three clip holes 55a, 55b, 55c are formed in order from the upper side in the circumferential direction of the bumper side wheel arch 53 with a space being formed between each of the clip holes 55a, 55b, 55c. Each clip hole 55 is formed to be oblong in shape. The length L1 of the clip hole 55 along the circumferential direction of the bumper side wheel arch 53 is made larger than the width L2 of the clip hole 55 along the radial direction of the bumper side wheel arch 53. It is to be noted that the length L1 of the clip hole 55 is larger than the length (not shown) of the clip hole 43 of the outer panel 4 along the circumferential direction of the panel side wheel arch 41.

As shown in Fig. 3B, the edge 54 of the bumper side wheel arch 53 is recessed in a vehicle inner side more than the decorative surface 5m of the rear bumper 5 and a step portion 54a is formed between the decorative surface 5m and the edge 54. Further, a peripheral part 56 of the each clip hole 55 is recessed in a vehicle inner side more than the surface of the edge 54. In addition, a rib 54b rising toward the vehicle outer side (the side of the wheel arch protector 6) is formed at an end of the front side of the edge 54.

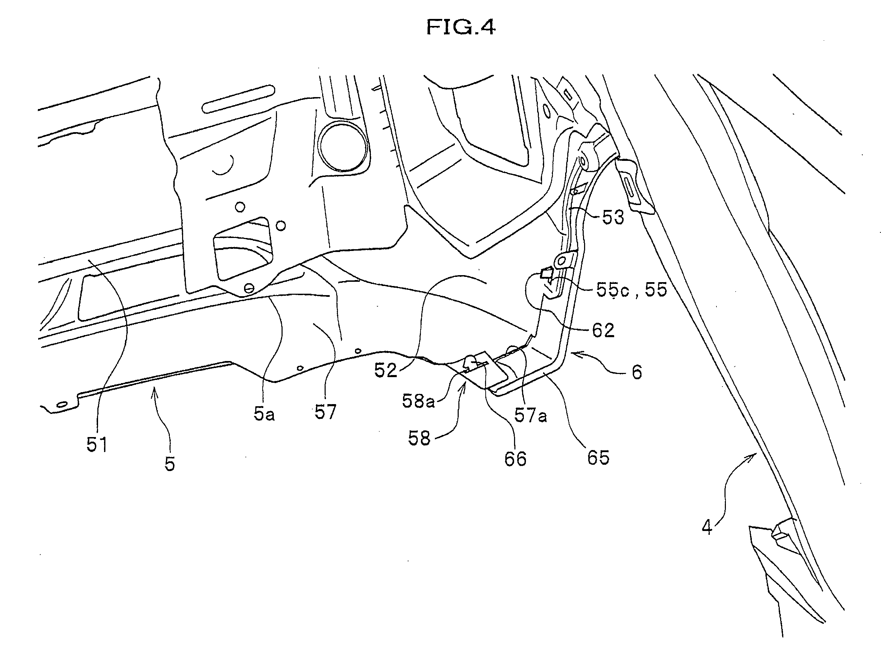

Fig. 4 is a perspective view showing the lower end of the rear bumper and a part around the lower end of the rear bumper seen downwardly from the vehicle inner side. As shown in Fig. 4, the plate-like flange part 57 extends toward the vehicle inner side at the rear end 5a of the rear bumper 5. An engaging portion 58 for engaging an engaging claw 66 of the wheel arch protector 6, which is described later, is provided to a front end portion 57a of the flange part 57. The engaging portion 58 is a plate member which extends frontward from the front end portion 57a of the flange part 57 and includes an oblong insertion hole 58a which is bored in the up-down direction.

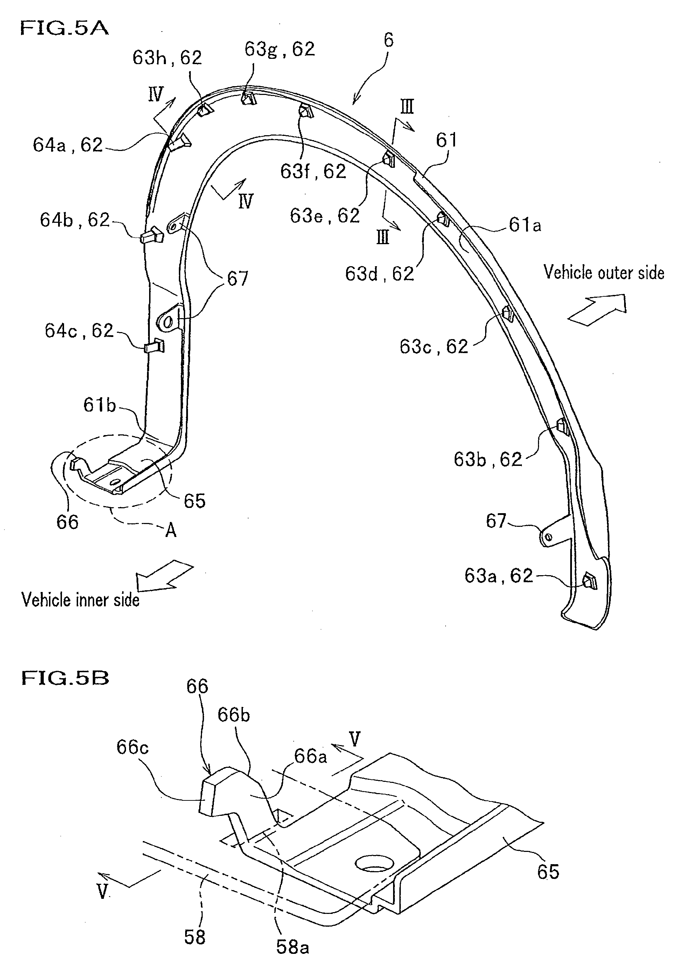

Fig. 5A is a perspective view showing the wheel arch protector seen downwardly from the vehicle inner side. Fig. 5B is an enlarged perspective view showing a part A in Fig. 5A.

As shown in Fig. 5A, the wheel arch protector 6 is a plate member which is formed in a semi-circular shape by injection molding of resin material, for example.

The wheel arch protector 6 protects and decorates the wheel arch 3 (see Fig. 1). The wheel arch protector 6 mainly includes a protector main body 61 which is formed in a substantially semi-circular shape; a plurality of clips 62 protruding from a vehicle-inner-side side surface 61a of the protector main body 61; an extending portion 65 which extends toward the vehicle inner side from the end portion 61b of the protector main body 61 on the side of the rear bumper 5; and an engaging claw 66 protruding from the upper surface of the extending portion 65.

Three bolt mounting portions 67 which are to be fastened to a flange portion (not shown) formed in the outer panel 4 with bolts protrude toward the vehicle inner side from a side edge of the protector main body 61 on an inner circumferential side.

As shown in Fig. 5B, the engaging claw 66 is a portion which is inserted through the through hole 58a of the engaging portion 58 provided to the rear bumper 5 and is tiltably engaged with the engaging portion 58.

The engaging claw 66 includes a claw main body 66a which protrudes in the up direction from the upper surface of the distal end of the extending portion 65; a tapered portion 66b provided on the vehicle-outer-side side surface of the claw main body 66a; and a protruding portion 66c provided on the vehicle-inner-side side surface of the claw main body 66a.

The thickness of the claw main body 66a in the front-rear direction is formed to be substantially the same as the width of the through hole 58a in the front-rear direction.

The width of the claw main body 66a in the left-right direction is formed to be less than the length of the through hole 58a in the left-right direction so that the claw main body 66 can be tilted in the left-right direction.

The tapered portion 66b is inclined to come close to the vehicle inner side as tending toward a distal end (an upper end). Thus, the engaging claw 66 is tapered, making it easy to insert the engaging claw 66 through the through hole 58a of the engaging portion 58.

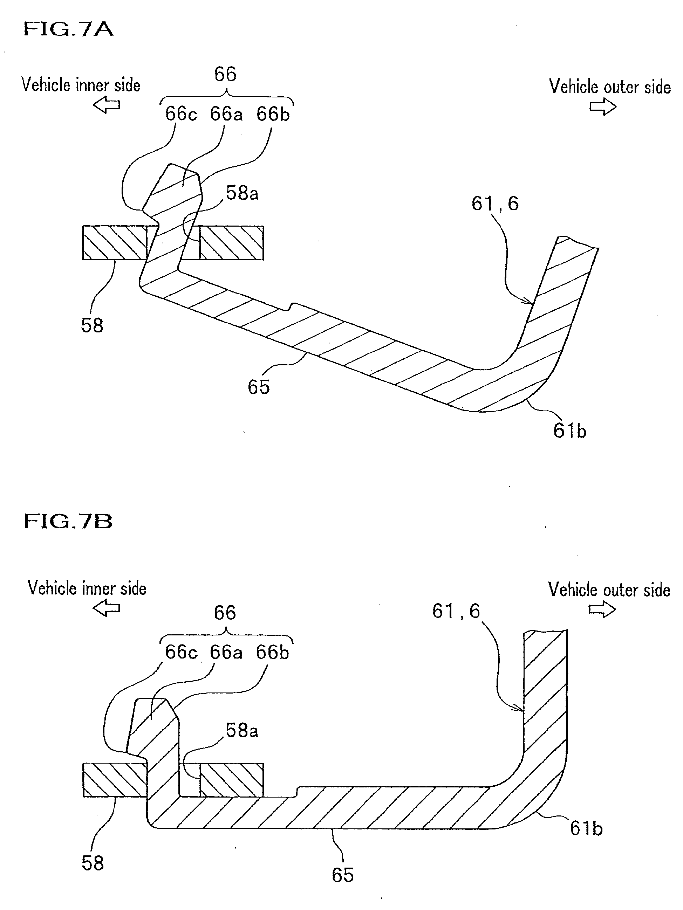

The protruding portion 66c is a portion which is hooked to the vehicle-inner-side edge of the through-hole 58a. The protruding portion 66c is a supporting point for tilting the wheel arch protector 6 (see Fig. 7).

As shown in Fig. 5A, a plurality of clips 62 is provided to the protector main body 61 in the circumferential direction of the protector main body 61 with some space being formed between each of the clips 62. In the embodiment, a plurality of clips 62 is comprised of eight panel clips 63a to 63h (hereinafter, may be referred to just as "a panel clip 63") corresponding to the eight clip holes 43a to 43h of the outer panel 4, and three bumper clips 64a to 64c (may be referred to just as "a bumper clip 64", hereinafter) corresponding to the three clip holes 55a to 55c of the rear bumper 5.

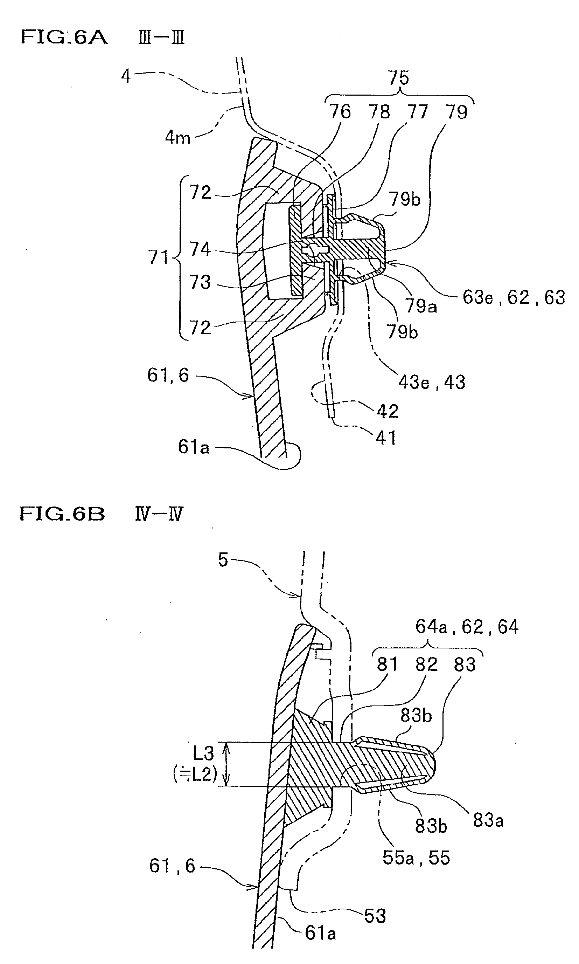

Fig. 6A is a cross sectional view along the line III-III in Fig. 5A. Fig. 6B is a cross sectional view along the line IV-IV in Fig. 5A.

As shown in Fig. 6A, the panel clip 63 is comprised of a supporting portion 71 and a head part unit 75 which is connected to the supporting portion 71.

The supporting portion 71 includes: a pair of leg portions 72, 72 which is erected on the vehicle-inner-side side surface 61a of the protector main body 61 with a space being formed between each leg portion 72; a base portion 73 which is extended between the leg portions 72, 72; and a slit 74 which is provided at the center of the base portion 73. Although not shown, one end of the slit 74 opens to one end side of the base portion 73 so that a wall portion 78 of the head part unit 75, which is described later, can be inserted into the slit 74.

The head part unit 75 includes a flat lower plate 76, an upper plate 77 which is provided spaced from the lower plate 76 on the vehicle inner side relative to the lower plate 76, a wall portion 78 which connects the lower plate 76 and the upper plate 77, and a head 79 which is provided to the vehicle inner side of the upper plate 77.

The head part unit 75 is detachably fixed to the supporting portion 71 by inserting the wall portion 78 in the slit 74 of the supporting portion 71 and sandwiching the base portion 73 with the lower plate 76 and the upper plate 77.

The head part 79 is a portion which is inserted into the clip hole 43 of the outer panel 4, and includes a wall-like core portion 79a and a pair of elastic deformable portions 79b, 79b which is provided at opposite sides of the core portion 79b in such a manner that the pair of elastic deformable portions 79b, 79b sandwich the core portion 79a. The elastic deformable portion 79b has a substantially V shape in a cross section such that the center part of the elastic deformable portion 79b is expanded outward (to the side opposed to the core portion 79b). A base of the elastic deformable portion 79b is fixed at an upper plate portion 77, and a distal end of the elastic deformable portion 79b is fixed at the distal end of the core portion 79a. Thus, the width of the distal end and the base of the head part 79 is smaller than that of the clip hole 43, and the width of the center part (bent part) of the head part 79 is larger than that of the clip hole 43.

When the panel clip 63 is connected to the clip hole 43 of the outer panel 4, firstly, the distal end of the head part 79 of the panel clip 63 is fit in the clip hole 43, and then the protector main body 61 is pressed toward the vehicle inner side. The elastic deformable portion 79b of the head part 79 is elastically deformed, and the width of the center part of the elastic deformable portion 79b is made smaller than that of the clip hole 43. The head part 79 is then inserted through the clip hole 43 and is arranged on the vehicle inner side of the outer panel 4. Thus, the base of the elastic deformable portion 79b is fit into the clip hole 43 and the restored center part of the elastic deformable portion 79b is engaged with the vehicle inner side of the clip hole 43.

As shown in Fig. 6B, the bumper clip 64 includes a base 81 protruding from the vehicle-inner-side side surface 61a of the protector main body 61, a neck part 82 further extending toward the vehicle inner side from the base part 81, and a head part further extending toward the vehicle inner side from the neck part 82. As understood by seeing Figs. 6A and 6B, the bumper clip 64 is formed to be in a shape more elongated than the panel clip 63.

The base part 81 is formed to be in a substantially trapezoidal shape in a cross section. The neck part 82 is a part which is fit into the clip hole 55 of the rear bumper 5, and the width L3 of the neck part 82 along the radial direction of the bumper side wheel arch 53 (the up-down direction in Fig. 6B) is formed to be substantially the same as the width L2 of the clip hole 55 (see Fig. 3). As the base 81 and the neck part 82 of the bumper clip 64 are formed in a solid structure, the rigidity (strength) thereof is higher than that of the supporting portion 71 of the panel clip 63.

The head part 83 is a part which protrudes toward the vehicle inner side from the clip hole 55 to be engaged with the clip hole 55. The head part 83 includes a wall-like core portion 83a which erects on the neck part 82 and elastic deformable portions 83b, 83b which are provided at opposite sides of the core portion 83a in such a manner that the elastic deformable portions 83b, 83b sandwich the core portion 83a. The elastic deformable portion 83b has a substantially V shape in a cross section such that the center part of the elastic deformable portion 83b is expanded outward (to the side opposite to the core portion 83a). The base of the elastic deformable portion 83b is fixed at the neck part 82 and the distal end of the elastic deformable portion 83b is fixed at the distal end of the core portion 83a. Thus, the width of the distal end and the base of the head part 83 is made smaller than the width L2 of the clip hole 55(see Fig. 3), and the width of the center part (bent part) of the head part 83 is made larger than the width L2 of the clip hole 55 (see Fig. 3).

When the bumper clip 64 is connected to the clip hole 55 of the rear bumper 5, firstly, the distal end of the head part 83 of the bumper clip 64 is fit into the clip hole 55 and then the protector main body 61 is pressed toward the vehicle inner side. The elastic deformable portion 83b of the head part 83 is elastically deformed, and the width of the center part of the elastic deformable portion 83b is made smaller than that of the clip hole 55. The head part 83 is then inserted through the clip hole 55 and is arranged on the vehicle inner side of the rear bumper 5. Thus, the base of the elastic deformable portion 83b is fit into the clip hole 55 and the restored center part of the elastic deformable portion 83b is engaged with the vehicle inner side of the clip hole 55.

It is to be noted that while the base of the elastic deformable portion 79b of the panel clip 63 is fixed at the thin-plate-like upper plate portion 77, the base of the elastic deformable portion 83b of the bumper clip 64 is fixed at the neck part 82 whose rigidity is higher than that of the upper plate portion 77. Therefore, the elastic deformable portion 83b of the bumper clip 64 is more difficult to be deformed (the rigidity is higher) than the elastic deformable portion 79b of the panel clip 63, and thus, the elastic deformable portion 83b of the bumper clip 64 has a more strong coupling strength than the elastic deformable portion 79b of the panel clip 63.

It is to be noted that as the bumper clip 64 is formed to be in a shape more elongated than the panel clip 63, it is possible to easily deform the elastic deformable portion 83b when inserting the bumper clip 64 into the clip hole 55 of the rear bumper 5.

Next, an assembly method of the wheel arch structure according to the embodiment is described with reference to Figs. 1 to 9B (mainly Figs. 7A to 9B).

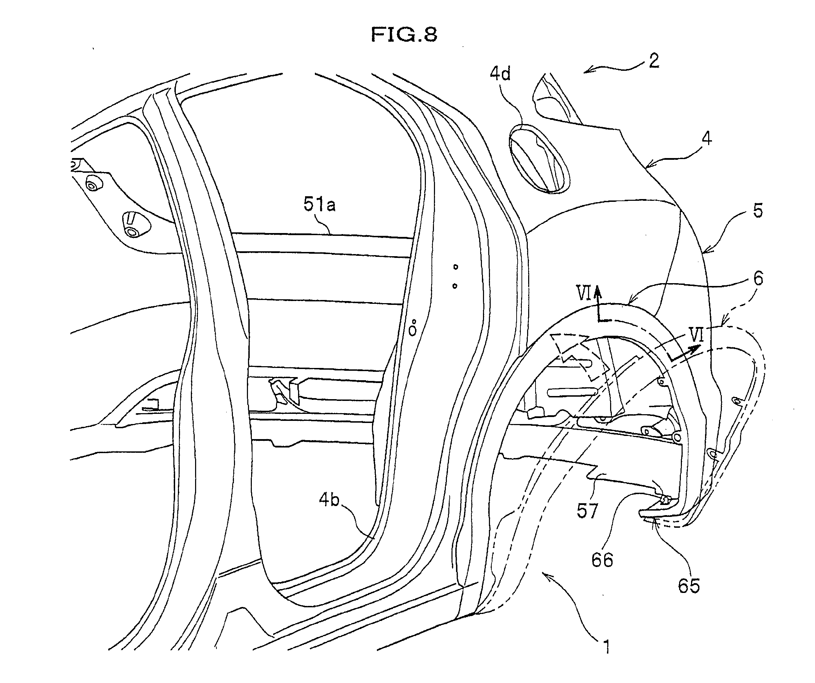

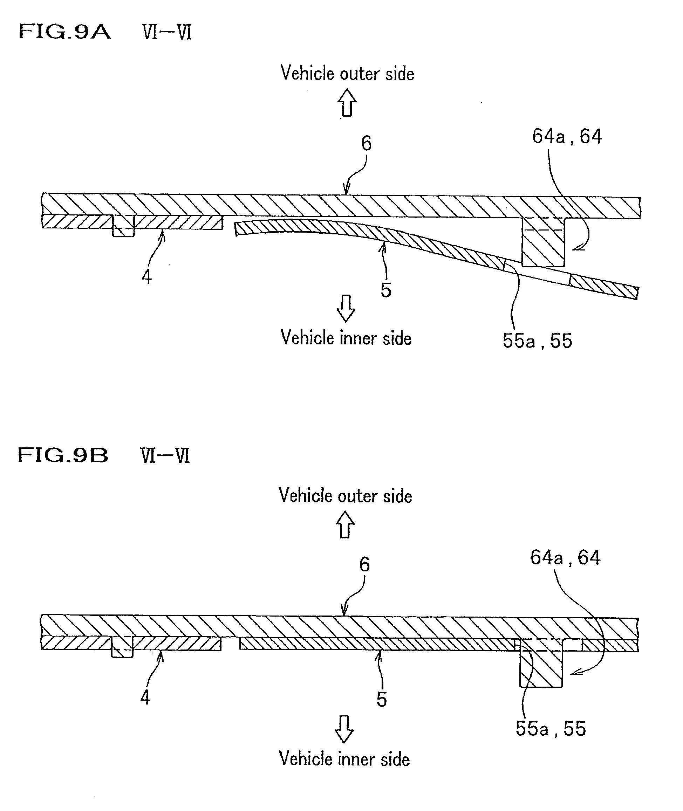

Here, Figs. 7A and 7B are cross sectional views along the line V-V in Fig. 5B. Fig. 7A shows a state where the wheel arch protector is tilted. Fig. 7B shows a state where the wheel arch protector is fixed to the outer panel. Fig. 8 is a perspective view showing the wheel arch structure seen from the front side of the vehicle toward the rear side of the vehicle. Figs. 9A and 9B are cross sectional views along the line IV-IV shown in Fig. 8. Fig. 9A shows a state where the rear bumper is flexibly bent. Fig. 9B shows a state where the bumper clip is connected to the clip hole of the rear bumper.

The assembly method of the wheel arch structure 1 according to the embodiment includes a first step of engaging the engaging claw 66 with the engaging portion 58 to fix the lower end portion 61b of the wheel arch protector 6 on the side of the rear bumper 5 as shown in Fig. 7A, a second step of connecting the panel clip 63e corresponding to a substantially center clip hole 43e of the plurality of clip holes 43 provided to the outer panel 4 to the clip hole 43e, as shown in Figs. 2A, 2B, 5A and 5B, and a third step of connecting the panel clips 63 and the bumper clips 64 to the rest of the clip holes 43 and the clip holes 55 sequentially from the substantially center clip hole 43e to the rest of the clip holes 43 and the clip holes 55 on both sides.

Firstly, as shown in Fig. 7A, the engaging claw 66 provided at the distal end of the extending portion 65 is inserted through the through hole 58a of the engaging portion 58 with the wheel arch protector 6 being inclined such that the upper side of the wheel arch protector 6 is spaced from the outer panel 4 (a state indicated by the dashed-two dotted line in Fig. 8). At this time, the engaging claw 66 is inclined such that the upper end thereof faces to the vehicle outer side, however, as the side surface of the engaging claw 66 on the vehicle-outer-side is provided with the tapered portion 66b, it is possible to easily insert the engaging claw 66 through the through hole 58a.

By inserting the engaging claw 66 into the through hole 58a, the protruding portion 66c formed on the vehicle inner side of the engaging claw 66 is arranged on the upper side of the engaging portion 58.

Next, as shown in Figs. 7B and 8, the upper side of the wheel arch protector 6(a top part of the arch and a part around the top part)is moved to come close to the outer panel 4 (to be in a state indicated by the continuous line shown in Fig. 8) with the protruding portion 66c of the engaging claw 66 being hooked to the vehicle-inner-side edge of the through hole 58a. At this time, as the engaging claw 66 is used as a reference point of positioning (a reference point of the front-rear position and the left-right position), it is possible to easily position the clips 62 and the clip holes 43, 55.

As shown in Figs. 2A, 2B, 5A, 5B and 8, a worker firstly connect the panel clip 63e to the clip hole 43e which is positioned at substantially center of the panel side wheel arch 41 of the outer panel 4 in the circumferential direction, wherein the panel clip 63e corresponds to the clip hole 43e. Next, the workers connect the panel clips 63d, 63f to the clip holes 43d, 43f which are adjacent to the clip hole 43e by extending his arms. The worker sequentially connects the panel clips 63a, 63b, 63c, 63g, 63h to the rest of the clip hole 43a, 43b, 43c, 43g, 43h by further extending his arms. With this structure, the displacement of the outer panel 4, the rear bumper 5 and the wheel arch protector 6 can be reduced because a lower end portion 5a of the rear bumper 5 is supported (restrained) by the outer panel 4 via the wheel arch protector 6 by connecting the clip 63e to the clip hole 43e positioned in substantially center of the plurality of clip holes 43 of the outer panel 4 in the second step. Further, it is also possible to simplify the connection work and to improve the workability thereof because the worker is allowed to connect the outer panel 4 and the wheel arch protector 6 by extending his arms in the circumferential direction of the panel-side wheel arch 41 from the center of the panel-side wheel arch 41 of the outer panel 4.

After connection of the outer panel 4 and the wheel arch protector 6 has been finished, the bumper clips 64 of the wheel arch protector 6 are then sequentially connected to the clip holes 55 of the rear bumper 5 as shown in Figs. 3A, 3B, 5A, 5B, 9A and 9B. After the wheel arch protector 6 becomes comparatively stable by connecting the plurality of clips 63 to the outer panel 4, the clips 64 are connected to the clip holes of the bumper. Thus, the wheel arch protector 6 and the rear bumper 5 can be easily connected.

In a case where the rear bumper 5 is comprised of resin members, the rear bumper 5 is deformed more easily than the outer panel 4 which is comprised of steel members. Therefore, when the bumper clip 64 is tried to be pushed into the clip hole 55 of the rear bumper 5, the rear bumper 5 is deformed toward the vehicle inner side and the clip hole 55 escapes as shown in Fig. 9A.

However, as the clip hole 55 according to the embodiment is formed to be a long hole having a long slit in the circumferential direction of the bumper side wheel arch 53, the clip hole 55 is prevented from coming off from the distal end of the bumper clip 64 even if the rear bumper 5 is deformed and the clip hole 55 escapes(i.e. the position of the clip hole 55 is changed). Thus, it is possible to easily connect the bumper clip 64 to the clip hole 55 of the rear bumper 5.

The lower end portion 52c of the side body of the rear bumper 5 is restrained by the engaging claw 66 of the wheel arch protector 6, the lower end portion 52c is difficult to be deformed in the vehicle inner side. The edge 54 of the rear bumper 5 is also difficult to be deformed since a step portion 54a and a rib 54b are formed so as to increase the rigidity thereof. This structure makes it easy to connect the rear bumper 5 and the wheel arch protector 6, whereby the workability of the connection work is improved.

The wheel arch structure 1 assembled as described above has the following effects. Specifically, as the engaging claw 66 is provided to the lower end portion 61b of the wheel arch protector 6 and the engaging portion 58 with which the engaging claw 66 is engaged is provided to the lower end portion 5a of the rear bumper 5, the lower end portion 61b of the wheel arch protector 6 on the rear bumper side can be connected to the lower end portion 5a of the rear bumper 5. Further, with the wheel arch structure 1 according to the embodiment, the engaging claw 66 provided to the lower end portion 61b of the wheel arch protector 6 on the side of the rear bumper 5 can be used as a reference point of positioning (the reference point of the front-rear positioning and the left-right positioning) when the wheel arch protector 6 is assembled to the outer panel 4 and the rear bumper 5. This makes it easy to position the clips 62 and the clip holes 43, 55 and to reduce positional gaps between the outer panel 4 and the rear bumper 5 and the wheel arch protector 6, whereby the assembly work can be simplified and the assembly accuracy can be enhanced.

Further, since the lower end portion 5a of the rear bumper 5 is restrained by the engaging claw 66 of the wheel arch protector 6, the rear bumper 5 is difficult to be moved away when the bumper clip 64 is pressed into the clip hole 55 of the rear bumper 5. Therefore, it is easy to connect the bumper clip 64 to the clip hole 55 of the rear bumper 5.

Moreover, in accordance with the above described structure, since the engaging claw 66 provided at the lower end portion 61b of the wheel arch protector 6 can be engaged with the engaging portion 58 provided at the lower end portion 5a of the rear bumper 5 with the wheel arch protector 6 being inclined with respect to the vehicle body, the protector main body 61 and the clip 62 do not come in contact with the vehicle body. This makes the assembly work under the bumper easier which would be otherwise difficult. Further, when the clips 62 are pressed into the clip holes 43, 55 by moving the wheel arch protector 6 toward the vehicle body with the engaging portion 58 and the engaging claw 66 being a pivot point of the movement of the wheel arch protector, the lower end portion 61b of the wheel arch protector 6 on the bumper-side becomes a reference of the positioning (a reference for the front-rear positioning and the left-right positioning), and thus, the clips 62 and the clip holes 43, 55 are difficult to be displaced. This further makes it easy to assemble the outer panel 4, the rear bumper 5 and the wheel arch protector 6.

Further, since the tapered portion 66b is formed on the vehicle outer side surface of the engaging claw 66 and the engaging claw 66 is formed in a taper shape, the engaging claw 66 is hardly hooked on the through hole 58a when the engaging claw 66 is inserted into the through hole 58a of the engaging portion 58 with the wheel arch protector 6 being inclined such that the upper part of the wheel arch protector 6 is away from the vehicle body. Therefore, a work for engaging the engaging claw 66 with the engaging portion 58 at the lower side of the rear bumper 5 becomes easy. It is to be noted that the engaging claw 66 protrudes from the upper surface of the extending portion 65 extending from the lower end portion of the protector body 61 toward the vehicle inner side and the through hole 58a of the engaging portion 58 is formed in a flange part extending toward the vehicle inner side from the lower end portion 5a of the rear bumper 5.

As the protruding portion 66c is formed at the vehicle inner side part of the engaging claw 66, the engaging claw 66 is difficult to be disengaged since the protruding portion 66c is hooked with the vehicle inner side edge of the through hole 58a. Therefore, when the wheel arch protector 6 is moved toward the vehicle body with the engaging claw 66 being a pivot point, it is possible to keep the engagement of the engaging portion 58 and the engaging claw 66.

Since a rear bumper is usually formed of a resin, it is common that the rigidity of a rear bumper is less than that of an outer panel. However, the elastic deformable portion 83b of the bumper clip 64 is formed to be more rigid (difficult to be deformed) than the elastic deformable portion 79b of the panel clip 63, the connection strength of the wheel arch protector 6 and the rear bumper 5 can be enhanced.

The embodiment of the present invention has been described with reference to the drawings as above; however, the present invention is not limited to the embodiment and may be modified without deviating from the spirit of the invention.

For example, the embodiment has been described taking the rear side wheel arch structure 1 of the vehicle 2; however, the present invention may be applied to the front side wheel arch structure of the vehicle 2.

There is provided a wheel arch structure which is made by connecting a wheel arch protector to a wheel arch formed in an arch shape from an outer panel to a bumper, the wheel arch protector including: a protector body which is formed in an arc shape; a plurality of clips which protrudes from a vehicle inner side surface of the protector body; and an engaging claw which is provided at a lower end of the protector body on the bumper side; wherein the outer panel includes a plurality of clip holes, each of which is connected to a part of the plurality of clips; and the bumper includes a plurality of clip holes, each of which is connected to the other part of the plurality of clips and an engaging portion which is provided at a lower end of the bumper and with which the engaging claw is engaged.

## Claims

1. A wheel arch structure (1) which is made by connecting a wheel arch protector (6) to a wheel arch (3) formed in an arch shape from an outer panel (4) to a bumper (5), the wheel arch protector (6) comprising:
a protector body (61) which is formed in an arc shape;
a plurality of clips (62, 63a-h, 64a-c) which protrudes from a vehicle inner side surface (61a) of the protector body (61); and
an engaging claw (66) which is provided at a lower end of the protector body (61) on the bumper side; wherein
the outer panel (4) includes a plurality of clip holes (43, 43a-h),
each of which is connected to a part of the plurality of clips (63a-h);
and
the bumper (5) includes a plurality of clip holes (55, 55a-c), each of which is connected to the other part of the plurality of clips (64a-c) and an engaging portion (58) which is provided at a lower end of the bumper (5) and with which the engaging claw (66) is engaged,
wherein the engaging portion (58) includes a through hole (58a) formed at a flange portion (57) extending toward the vehicle inner side from a lower end portion of the bumper (5),
**characterized in that**
the engaging claw (66) protrudes from an upper surface of an extending portion (65) extending toward a vehicle inner side from the lower end portion of the protector body (61), and
a tapered portion (66b) is formed on a vehicle outer side surface of the engaging claw (66) and a protruding portion (66c) is formed on the vehicle inner side surface of the engaging claw (66).

2. The wheel arc structure (1) according to Claim 1, wherein the engaging claw (66) is tiltably engaged with the engaging portion (58) in a state where the clips (62) are not connected to the clip holes (43, 55).

3. The wheel arch structure (1) according to any one of Claims 1 to 2, wherein the length of the clip holes (55a-c) provided at the bumper (5) in a circumferential direction of the wheel arch (3) is longer than that of the clip holes (43a-h) provided at the outer panel (4).

4. The wheel arch structure (1) according to any one of Claims 1 to 3, wherein the clips (64a-c) which correspond to the clip holes (55a-c) provided at the bumper (5) is more rigid than the clips (63a-h) which correspond to the clip holes (43a-h) provided at the outer panel (4).

5. A method for assembling the wheel arch structure (1) according to any one of Claims 1 to 4, the method comprising steps of
a first step of restraining the lower end of the wheel arch protector (6) on the bumper side by engaging the engaging claw (66) with the engaging portion (58),
a second step of firstly connecting one of the clips (63e) to one of the clip holes (43e) which is positioned in substantially center among the plurality of clip holes (43, 43a-h) provided to the outer panel (4), the one of the clips (63e) corresponding to the one of the clip holes. (43e), and
a third step of next connecting the clips (63a-d, 63f-h, 64a-c) to the remaining clip holes (43a-d, 43f-h, 55a-c) in order from the one of the clip holes (43e) positioned in substantially center toward the clip holes on both sides of the one of the clip holes (43e).

6. The method for assembling the wheel arch structure (1) according to Claim 5, wherein
in the first step the engaging claw (66) is engaged with the engaging portion (58) with the wheel arch protector (6) being inclined with respect to the vehicle body, and
in the second step, the wheel arch protector (6) is moved toward the vehicle body with the engaging claw (66) being a pivot point of the movement of the wheel arch protector (6) in order to connect the one of the clips (63e) to the one of the clip holes (43e) positioned at substantially center among the plurality of the clip holes (43, 43a-h).

## Patentansprüche

1. Radlaufstruktur (1), welche durch Verbinden eines Radlaufprotektors (6) mit einem Radlauf (3) hergestellt wird, welcher von einer Außenplatte (4) zu einer Stoßstange (5) bogenförmig gebildet ist, wobei der Radlaufprotektor (6) umfasst:
einen Protektorkörper (61), welcher bogenförmig gebildet ist;
eine Mehrzahl von Klipps (62, 63a-h, 64a-c), welche von einer Fahrzeuginnenseitenfläche (61 a) des Protektorkörpers (61) vorstehen; und
eine Eingriffsklaue (66), welche an einem unteren Ende des Protektorkörpers (61) an der Stoßstangenseite bereitgestellt ist; wobei
die Außenplatte (4) eine Mehrzahl von Klipplöchern (43, 43a-h) umfasst, welche jeweils mit einem Teil von der Mehrzahl von Klipps (63a-h) verbunden sind; und
wobei die Stoßstange (5) eine Mehrzahl von Klipplöchern (55, 55a-c), welche jeweils mit dem anderen Teil von der Mehrzahl von Klipps (64a-c) verbunden sind, und einen Eingriffsabschnitt (58) umfasst, welcher an einem unteren Ende der Stoßstange (5) bereitgestellt ist und mit welchem die Eingriffsklaue (66) in Eingriff steht,
wobei der Eingriffsabschnitt (58) ein Durchgangsloch (58a) umfasst, welches an einem Flanschabschnitt (57) gebildet ist, welcher sich zu der Fahrzeuginnenseite von einem unteren Endabschnitt der Stoßstange (5) erstreckt,
**dadurch gekennzeichnet, dass** die Eingriffsklaue (66) von einer oberen Fläche eines Erstreckungsabschnitts (65) vorsteht, welcher sich zu einer Fahrzeuginnenseite von dem unteren Endabschnitt des Protektorkörpers (61) erstreckt, und dass
ein geneigter Abschnitt (66b) an einer Fahrzeugaußenseitenfläche der Eingriffsklaue (66) gebildet ist, und dass ein vorstehender Abschnitt (66c) an der Fahrzeuginnenseitenfläche der Eingriffsklaue (66) gebildet ist.

2. Radlaufstruktur (1) nach Anspruch 1,
wobei die Eingriffsklaue (66) neigbar mit dem Eingriffsabschnitt (58) in einem Zustand in Eingriff steht, in welchem die Klipps (62) nicht mit den Klipplöchern (43, 55) verbunden sind.

3. Radlaufstruktur (1) nach einem der Ansprüche 1 bis 2,
wobei die Länge der Klipplöcher (55a-c), welche an der Stoßstange (5) in einer Umfangsrichtung des Radlaufs (3) bereitgestellt sind, länger als diejenige der Klipplöcher (43a-h) ist, welche an der Außenplatte (4) bereitgestellt sind.

4. Radlaufstruktur (1) nach einem der Ansprüche 1 bis 3,
wobei die Klipps (64a-c), welche den an der Stoßstange (5) bereitgestellten Klipplöchern (55a-c) entsprechen, eine höhere Steifigkeit aufweisen als die Klipps (63a-h), welche den an der Außenplatte (4) bereitgestellten Klipplöchern (43a-h) entsprechen.

5. Verfahren zum Zusammenbauen der Radlaufstruktur (1) nach einem der Ansprüche 1 bis 4, wobei das Verfahren die Schritte umfasst:
einen ersten Schritt zum Zurückhalten des unteren Endes des Radlaufprotektors (6) an der Stoßstangenseite, indem die Eingriffsklaue (66) mit dem Eingriffsabschnitt (58) in Eingriff gebracht wird,
einen zweiten Schritt, in welchem zuerst einer der Klipps (63e) mit einem der Klipplöcher (43e) verbunden wird, welches im Wesentlichen in der Mitte aus der Mehrzahl von an der Außenplatte (4) bereitgestellten Klipplöchern (43, 43a-h) angeordnet ist, wobei der eine von den Klipps (63e) dem einen von den Klipplöchern (43e) entspricht, und
einen dritten Schritt, in welchem als nächstes die Klipps (63a-d, 63f-h, 64a-c) mit den verbleibenden Klipplöchern (43a-d, 43f-h, 55a-c) in der Reihenfolge von dem einen von den Klipplöchern (43e), welches im Wesentlichen in der Mitte angeordnet ist, zu den Klipplöchern an beiden Seiten von dem einen von den Klipplöchern (43e) verbunden werden.

6. Verfahren zum Zusammenbauen der Radlaufstruktur (1) nach Anspruch 5, wobei
in dem ersten Schritt die Eingriffsklaue (66) mit dem Eingriffsabschnitt (58) in Eingriff gebracht wird, wobei der Radlaufprotektor (6) bezüglich der Fahrzeugkarosserie geneigt ist, und wobei
im zweiten Schritt der Radlaufprotektor (6) in Richtung der Fahrzeugkarosserie bewegt wird, wobei die Eingriffsklaue (66) ein Drehpunkt der Bewegung des Radlaufprotektors (6) ist, um den einen von den Klipps (63e) mit dem einen von den Klipplöchern (43e) zu verbinden, welches im Wesentlichen in der Mitte aus der Mehrzahl von Klipplöchern (43, 43a-h) angeordnet ist.

## Revendications

1. Une structure de passage de roue (1) qui est assemblée en raccordant un protecteur de passage de roue (6) à un passage de roue (3) formé en arc à partir d'un panneau externe (4) à un pare-chocs (5), le protecteur de passage de roue (6) comprenant :
un corps protecteur (61) qui est formé en arc ;
plusieurs attaches (62, 63a-h,64a-c) qui font saillie d'une face latérale interne du véhicule (61a) du corps protecteur (61) ; et
une griffe d'engagement (66) qui est prévue à une extrémité inférieure du corps protecteur (61) du côté pare-chocs ; dans laquelle
le panneau externe (4) comprend plusieurs orifices d'attache (43, 43a-h) dont chacun est raccordé à une partie des plusieurs attaches (63a-h) ; et
le pare-chocs (5) comprend plusieurs orifices d'attache (55, 55a-c) dont chacun est raccordé à l'autre partie des plusieurs attaches (64a-c) et une partie d'engagement (58) qui est prévue à une extrémité inférieure du pare-chocs (5) et avec laquelle la griffe d'engagement (66) entre en prise, la partie d'engagement (58) comprenant un orifice traversant (58a) formé à une partie de bride (57) s'étendant vers le côté interne du véhicule à partir d'une partie d'extrémité inférieure du pare-chocs (5),
**caractérisée en ce**
**que** la griffe d'engagement (66) fait saillie d'une surface supérieure d'une partie d'extension (65) s'étendant vers un côté interne du véhicule à partir de la partie d'extrémité inférieure du corps protecteur (61), et
une partie effilée (66b) est formée sur une surface latérale externe du véhicule de la griffe d'engagement (66) et une partie saillante (66c) est formée sur le côté latéral interne du véhicule de la griffe d'engagement (66).

2. La structure de passage de roue (1) selon la revendication 1, dans laquelle la griffe d'engagement (66) entre en prise à basculement avec la partie d'engagement (58) dans un état dans lequel les attaches (62) ne sont pas raccordées aux orifices d'attache (43,55).

3. La structure de passage de roue (1) selon l'une des revendications 1 à 2, dans laquelle la longueur des orifices d'attache (55a-c) prévus sur le pare-chocs (5) dans une direction circonférentielle du passage de roue (3) est supérieure à celle des orifices d'attache (43ah) prévus sur le panneau externe (4).

4. La structure de passage de roue (1) selon l'une des revendications 1 à 3, dans laquelle les attaches (64a-c) qui correspondent aux orifices d'attache (55a-c) prévus sur le pare-chocs (5) sont moins rigides que les attaches (63a-h) qui correspondent aux orifices d'attache (43a-h) prévus sur le panneau externe (4).

5. Un procédé d'assemblage de la structure de passage de roue (1) selon l'une des revendications 1 à 4, le procédé comprenant les étapes suivantes :
une première étape de retenue de l'extrémité inférieure du protecteur de passage de roue (6) du côté pare-chocs en engageant la griffe d'engagement (66) avec la partie d'engagement (58),
une deuxième étape consistant à raccorder d'abord l'une des attaches (63e) à l'un des orifices d'attache (43e) qui est positionné en substance au centre des plusieurs orifices d'attache (43, 43a-h) prévus sur le panneau externe (4), l'une des attaches (63e) correspondant à l'un des orifices d'attache (43e) et
une troisième étape consistant à raccorder ensuite les attaches (63a-d, 63f-h, 64a-c) aux orifices d'attache résiduels (43a-d, 43f-h, 55a-c) dans l'ordre d'un des orifices d'attache (43e) positionné en substance au centre vers les orifices d'attache de part et d'autre de l'un des orifices d'attache (43e).

6. Le procédé pour l'assemblage de la structure de passage de roue (1) selon la revendication 5, dans lequel,
dans la première étape, la griffe d'engagement (66) entre en prise avec la partie d'engagement (58), le protecteur de passage de roue (6) étant incliné par rapport au châssis du véhicule et,
dans la deuxième étape, le protecteur de passage de roue (6) est déplacé vers le châssis du véhicule, la griffe d'engagement (66) étant un point pivot du mouvement du protecteur de passage de roue (6) afin de raccorder l'une des attaches (63e) à l'un des orifices d'attache (43e) positionnés en substance au centre parmi les plusieurs orifices d'attache (43, 43a-h).
